Europäisches Patentamt

European Patent Office

Office européen des brevets

(19)

(11) Veröffentlichungsnummer: **0 205 823**
**A2**

(12) **EUROPÄISCHE PATENTANMELDUNG**

(21) Anmeldenummer: **86105712.3**

(22) Anmeldetag: **25.04.86**

(51) Int. Cl.⁴: **F16L 37/08**

(30) Priorität: **27.06.85 DE 3523079**

(43) Veröffentlichungstag der Anmeldung:
**30.12.86 Patentblatt 86/52**

(84) Benannte Vertragsstaaten:
**FR GB IT SE**

(71) Anmelder: **THYSSEN PLASTIK ANGER KG**
**Anzinger Strasse 1**
**D-8000 München 80(DE)**

(72) Erfinder: **Schwarzensteiner, Hermann**
**Girletweg 5**
**D-8445 Windberg(DE)**
Erfinder: **Parey, Jürgen, Dr.**
**Albertstrasse 30**
**D-8443 Bogen(DE)**

(54) **Schnellkupplung, für Rohre oder dergleichen.**

(57) Mit der Erfindung wird eine Schnellkupplung für Einfach-und Mehrfachrohre vorgeschlagen, die im wesentlichen aus im Innenrohr angebrachte Wülste, bzw. entsprechend ausgeformte Vertiefungen und damit korrespondierende, am Außenrohr vorgesehene Spannhaken besteht, wobei die Spannhaken aus einem geschlitzten Ring am Ende des äußeren Rohres entstehen und nach außen federn. Die kraftschlüssige Arretierung der Spannhaken über der Wulst, bzw. Vertiefung erfolgt durch eine überschiebbare Hülse, die gleichzeitig den Kupplungsbereich vor etwa eindringendem Schmutz schützt.

Fig. 1

EP 0 205 823 A2

## SCHNELLKUPPLUNG FÜR ROHRE ODER DERGLEICHEN

Schnellkupplung für Rohre oder dergl., vorzugsweise druckbeaufschlagte Rohrleitungen, Anschlußstutzen, etc. mit je einem Muffen-und einem Steckteil, wobei das Muffenteil außen mit einer Unterfederspannung in der Wirkstellung gehaltenen Hülse umgeben ist.

Schnellkupplungen für Flüssigkeitsleitungen oder dergl. sind an sich bekannt. Sie sind für koaxial verlaufende Leitungen eingerichtet und besitzen, wie aus der DE-OS 28 37 478 ersichtlich, keilförmige Führungen, bzw. Verschlüsse für die beiden zu verbindenden Teile, bzw. besonders bei druckbeaufschlagten Hydraulikleitungen mit einer Axialbohrung versehende Gehäuse. In diese Axialbohrung wird, wie in der DE-OS 31 43 015 dargestellt, das glatte Ende der Rohrleitung gesteckt und mittels einer ringförmigen Dichtung abgedichtet. Die Verriegelung der Kupplung erfolgt dabei mittels einer lösbaren, in das Gehäuse einschnappbaren Haltevorrichtung, die mit einem ringförmigen Vorsprung an der Rohrleitung zusammenwirkt.

Ähnlich ist eine Schnellkupplung gem. der DE-OS 23 62 527 aufgebaut.

Es ist auch aus der DE-OS 24 01 582 bekannt, die zu verbindenden Rohrteile, bzw. Anschlußstutzen und Rohrenden mit - schrägverlaufenden Querbohrungen zu versehen, in welche Stifte, bzw. Schrauben eingeführt sind, um die beiden zu verbindenden Rohrenden lösbar zu arretieren.

Diese bekannten Schnellverbindungen weisen mehrere Nachteile auf. So sind sie einerseits mit zu vielen Einzelteilen aufgebaut, teuer in der Herstellung und umständlich zu handhaben, andererseits ist wegen ungleichmäßiger Krafteinleitung in den Muffenbereich erhebliche Bruchgefahr gegeben. Dies hat seinen Grund in der Verwendung von Haltevorrichtungen, Sperrgliedern, usw. Auch die als Dichtung eingesetzten vorgedrückten 0-Ringe bewirken eine ungleichmäßige Krafteinleitung. Dabei werden besonders beim Einstecken der Rohre in den Verbindungsbereich Stege etc. verbogen, sie können auch brechen, wodurch die Verbindung,wenn nicht vollständig aufgehoben, so doch undicht wird. Außerdem müssen diese Schnellkupplungen manuell zusammengeführt werden. Sie eignen sich nicht für den Einsatz in automatisierten Fertigungen. .

Hier will die Erfindung Abhilfe schaffen. Ihr liegt daher die Aufgabe zugrunde, eine Schnellkupplung zu schaffen, die einfach und wirtschaftlich herstellbar ist, in Großserienfertigungen automatisch zusammensteckbar ist, keine manuellen Verrichtungen benötigt, und selbsttätig die zu verbindenden Rohre, bzw. Anschlußstutzenenden, im Kupplungsbereich verbindet, wobei auch Mehrfachrohrleitungen verbunden werden müssen und der Kupplungsbereich vor Verschmutzungen geschützt wird.

Gemäß der Erfindung wird dies dadurch erreicht, daß das Innere der beiden zu verbindenden Rohre im Kupplungsbereich einen ringförmigen Außenwulst besitzt, das Ende des äußeren Rohres als über diesen Wulst einrastenden, radial federnden, längsgeschlitzten Ring als Schnapphaken ausgebildet ist und eine axial verschiebliche, in Wirkstellung den Kupplungsbereich abdeckende und den federnden Ring mit seinen Schnapphaken radial nach außen fixierenden Hülse vorgesehen ist.

Vorteilhafterweise ist die längs verschiebliche Hülse zwischen einem am inneren Rohr vorgesehenen und einem im Abstand darunter angeordneten geteilten Ring verschiebbar angeordnet und mit ihren Innenflächen auf den Außenflächen des Bundes und des Ringes geweitend vorgesehen.

Vorteilhafterweise ist in dem Raum zwischen Zwischenwand des inneren Rohres und der inneren Wand der Hülse, zwischen dem Bund und einem ringförmigen Vorsprung der Hülse in Richtung auf die Außenfläche des inneren Rohres, eine Feder vorgesehen.

Vorteilhafterweise stützt sich die Hülse an dem ringförmigen Vorsprung der Zwischenwand des inneren Rohres ab.

Vorteilhafterweise ist in der Nähe des glatten Endes des inneren Rohres mindestens eine Ringdichtung vorgesehen.

Vorteilhafterweise ist das äußere Rohr mit einer muffenartigen Erweiterung versehen, an dessen Ende der Ring mit seinen Schnapphaken angeordnet ist.

Vorteilhafterweise ist mindestens eine ringförmige Dichtung im Muffenbereich des äußeren Rohres vorgesehen.

Vorteilhafterweise ist das innere Rohr im Kupplungsbereich mit einer ringförmigen Einbuchtung versehen, in die Schnapphaken des Ringes des äußeren Rohres rasten.

Vorteilhafterweise ist die Hülse als abnehmbare und in eine ringförmige Hinterschneidung des äußeren Rohres einschiebbare Abdeckung ausgebildet.

Eine Ausführungsvariante sieht vor, daß die miteinander zu verbindenden inneren und äußeren Rohre als Mehrfachrohre ausgebildet sind.

Vorteilhafterweise sind die Mehrfachrohre im Kupplungsbereich mit ringförmigen Dichtungen versehen.

Vorteilhafterweise werden die zu verbindenden Rohre innen metallisiert.

Vorteilhafterweise ist in den Rohren eine elektrische Leitung verlegt.

Vorteilhafterweise ist in mindestens einem der zu verbindenden Rohre eine elektrische Heizleitung enthalten.

Die mit der Erfindung vorgeschlagene Schnellkupplung für Rohre oder dergl. weist verschiedene Vorteile auf. Durch die Ausbildung eines geschlitzten Ringes am Ende des äußeren Rohres, dessen Schnapphaken federnd mit einem Wulst oder einer Vertiefung des inneren Rohres zusammen arbeiten ist eine radial und auch axial wirkende Verbindung geschaffen.

Dadurch, daß die verschiebliche Hülse an einem ringförmigen Bund des inneren Rohres entlang gleitet, kann kein Schmutz in den Kupplungsbereich eindringen und dessen Wirkung herabsetzen. Die Kupplung ist schnell und einfach zu montieren, leicht lösbar, ist dicht und formstabil. Darüberhinaus ist sie durch automatisch wirkende Einrichtungen, wie beispielsweise Montage-Roboter zusammenfügbar, ent-und verriegelbar. Das Fixieren der Hülse geschieht durch die Reibkräfte der Schnapphaken des Ringes.Unter Last wird dadurch ein selbsttätiges Zurückrutschen der Hülse verhindert. Die vorgesehen Längstoleranz ist ausreichend für einen Temperaturausgleich und zur Verhinderung von Abwinkelungen, beispielsweise im rauhen Betrieb, wodurch auch die lange Führungsfläche beiträgt. Das Einrichten der zu verbindenden Rohre für die Aufnahme einer elektrischen Leitung, auch einer Heizleitung, ist ohne weiteres möglich und im Kupplungsbereich kann gleichzeitig eine entsprechende elektrische Verbindung mit vorgesehen sein. So ist es beispielsweise im Automobilbetrieb von Vorteil, wenn elektrische Signale zwischen Tank und Motor oder dergl. zu übertragen sind. Bei Diesel -betriebenen Fahrzeugen ist es von Vorteil, wenn Mehrfachleitungen verlegt werden, beispielsweise zwischen Tank und Kraftstoffpumpe. Hierdurch ist die, Möglichkeit eröffnet, beispielsweise beiEinsatz unter extremen Bedingungen den Rücklauf im äußeren Rohr vorzusehen, da das zurück in den Tank geführte Dieselöl eine höhere Temperatur aufweist und den Vorlauf im Innenrohr, der durch das wärmere, im Außenrohr fließende, Dieselöl erwärmt wird. Darüberhinaus kann beispielsweise auch das Innenrohr elektrisch beheizt sein, wobei die elektrische Kupplung zwischen beiden Rohren ohne weiteres im Kupplungsbereich vorgesehen werden kann.

Die Erfindung ist nachstehend anhand in den Abbildungen dargestellten Ausführungsbeispielen näher erläutert. Es zeigt:

Figur 1 die Schnellkupplung im Schnitt,

Figur 2 eine Ausführungsvariante der Figur 1,

Figur 3 einen Schniauudurch Figur 2,

Figur 4 eine weitere Ausführungsvariante der Figur 1 für konzentrische Rohre,

Figur 5 eine Draufsicht auf Figur 4,

Figur 6 eine weitere Ausführugnsvariante der Digur 1 für Mehrfachrohre und

Figur 7 einen Schnitt durch Figur 6

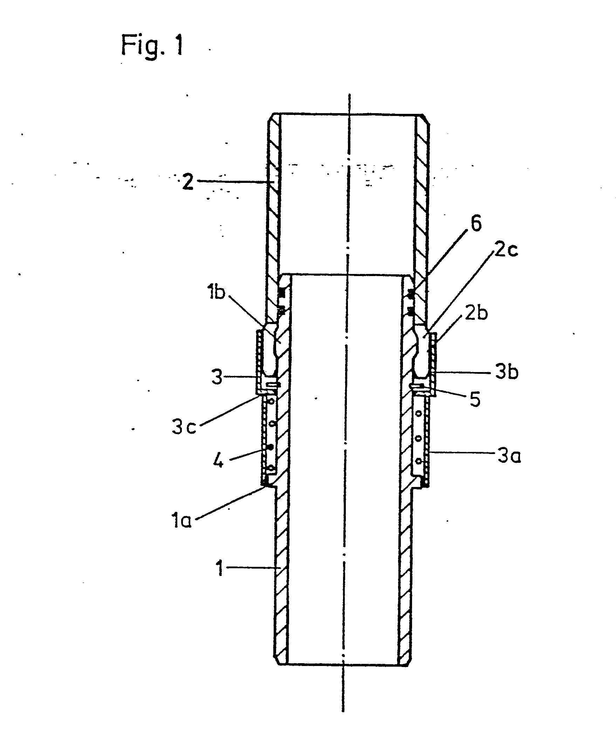

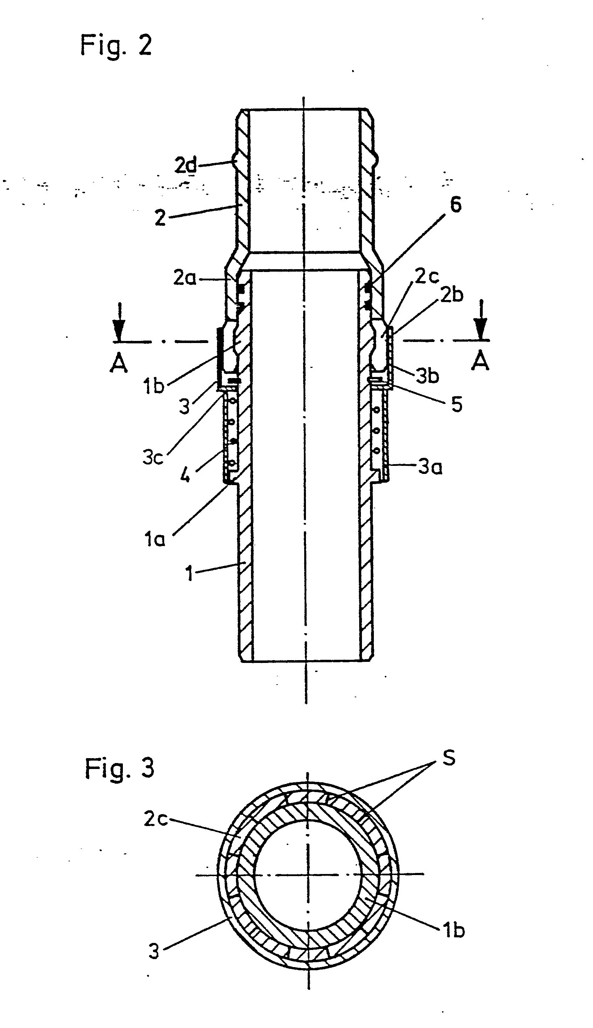

Die Figur 1 zeigt die Schnellkupplung für die Verbindung zweier Rohre 1 und 2. Das innere Rohr 1 ist am Beginn des Kupplungsbereiches mit einem Bund 1a und im Kupplungsbereich mit einem äußeren Wulst 1b versehen, wovon der Wulst 1a einerseits als Gleit-und Stutzfläche für die Hülse 3 und andererseits als Abdeckung zum Schutz des inneren Bereiches der Kupplung vor Verschmutzung dient. Das äußere Rohr 2 besitzt an seinem Ende einen geschlitzten Ring 2b, der mit aus der Figur 3 ersichtlichen Schlitzen S in einzelne Segmente geteilt ist, sodaß sich nach außen federnde Schnapphaken 2c ergeben, die innen eine dem Wulst 1b entsprechende Profilierung aufweisen und beim Einschieben des Rohres 1 in das Rohr 2 über diesen Wulst schnappen und ein Herausrutschen verhindern. Diese Verriegelungswirkung wird erhöht durch die Hülse 3, die gegen den Druck der Feder 4 vor dem Zusammenkuppeln der beiden Rohre 1 und 2 soweit zurückgezogen wird, daß der eigentliche Kupplungsbereich mit dem Wulst 1b und den Schnapphaken 2c freigelegt wird, wodurch beim Einschieben des Rohres 1 diese Schnapphaken 2c nach außen federn und erst nach deren Einrasten über den Wulst 1b des Rohres 1 durch Vorschieben der Hülse 3 radial und auch axial verriegelt werden. Dabei gleitet der Hülsenteil mit dem geringeren Druchmesser 3a an dem Bund 1a des Rohres 1 der ringförmige Vorsprung 3c an der Außenwandung des Rohres 1 und der eigentliche Kupplungsteil mit größerem Durchmesser 3b an der Außenfläche der Spannhaken 2c entlang, wobei ein geteilter Ring 5, der in einer Hinterschneidung des Rohres 1 eingesetzt ist,als Anschlag dient und eine Feder 4 im Raum zwischen der Außenwandung des Rohres 1 und dem Hülsenteil 3a ein Zurückweichen der Hülse 3 aus der Wirkstellung zusätzlich verhindert. An sich sind die Reibkräfte zwischen den Spannhaken 2c und dem Hülsenteil 3b ausreichend um ein selbsttätiges Verschieben der Hülse 3 zu verhindern. Mit 6 sind ein oder mehrere Dichtringe in Nuten der Wandung des Rohres 1 bezeichnet.

In der Figur 2 ist eine Ausführungsvariante der Figur 1 dargestellt, die einen erweiterten Muffenbereich 2a für die Aufnahme des inneren Rohres 1 besitzt, wodurch in bekannter Weise ein zusätzlicher fester Sitz mit definierter Eindringtiefe erreicht wird. Das Rohr 2 besitzt außerdem noch einen Wulst 2d, worüber vorteilhafterweise ein SChlauch geschoben werden kann.

Die Figur 3 zeigt einen Schnitt in Richtung A-A durch die Figur 2, wobei die Schlitze S und die Spannhaken 2c des Ringes 2b des Rohres 2 deutlich zu sehen sind.

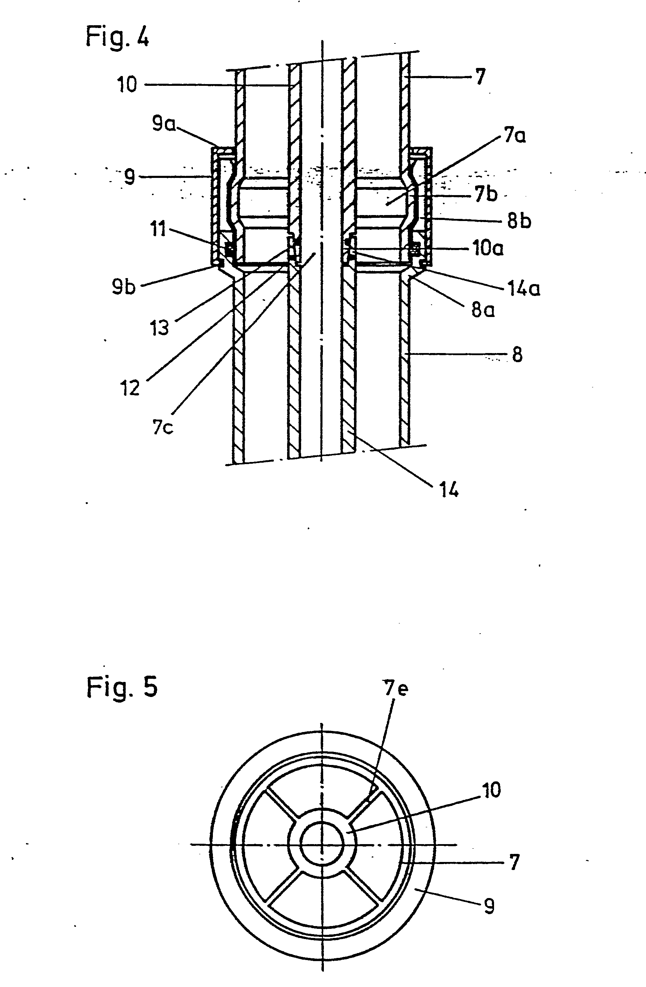

Figur 4 zeigt eine weitere Ausführungsvariante der Erfindung anhand der Verbindung zweier konzentrischer Rohrleitungen. Das innere Rohr 7 ist als Doppelrohr ausgebildet, wobei zwei Kupplungsbereiche vorhanden sind. Der Kupplungsbereich 7a weist einen nach außen geformten Wulst 7b auf, der mit den Spannhaken 8b (entsprechend den Spannhaken 2c der Figuren 1 und 2) zusammen arbeitet und einen inneren Kupplungsbereich 7c, der beispielsweise durch konisch ausgebildete Rohrenden 10a-14a gebildet ist. Über den Kupplungsbereich ist außen eine Öse 9 angeordnet, die beim Aufbringen mit dem nach innen gerichteten ringförmigen Fortsatz 9b in eine Nut des Muffenbereiches 8a des äußeren Rohres 8 einrastet. Ein gegenüberliegender ringförmiger, nach innen gerichteter Fortsatz 9a schließt den Muffenbereich ab und verhindert das Eindringen von Schmutz.

Die Figur 5 zeigt die Draufsicht auf Figur 4. Dabei ist der Muffenbereich zu erkennen, mit dem inneren Rohr 7, das beispielsweise als konzentrisch ausgebildetes Rohr mit der im Zentrum verlaufenden Leitung 10 mit Stegen 7e verbunden ist. Dichtungen zwischen dem inneren Rohr 7 und dem äußeren Rohr 8 sind mit 11 und solche zwischen den beiden konzentrischen Rohrteilen 10 und 14 mit 12 bzw. 13 bezeichnet.

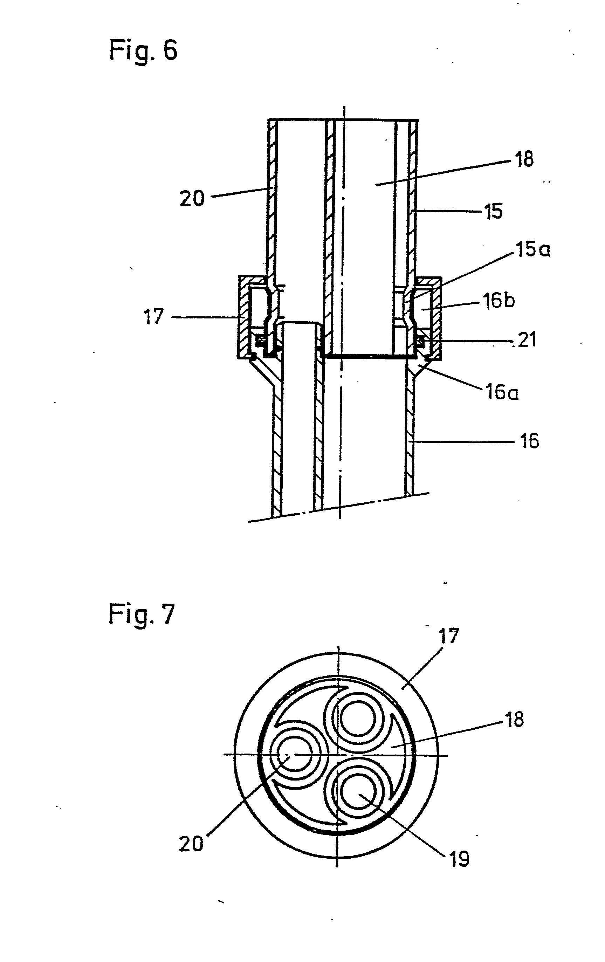

Eine weitere Ausführungsvariante zeigt die Figur 6, bei der ein Mehrfachrohr mit beispielsweise vier Leitungen mittels der erfindungsgemäß vorgeschlagenen Schnellkupplung verbunden ist. Dabei ist das innere Rohr mit 15 bezeichnet, das im Kupplungsbereich eine nach innen weisende ringförmige Vertiefung 15a aufweist in die entsprechend geformte Spannhaken 16b des äußeren Rohres 16 einrasten. Auch in dieser Ausführungsvariante ist ein Muffenbereich 16a vorgesehen, der das äußere Rohr 16 gegenüber dem inneren Rohr 15 mittels einer Dichtung 21 abdichtet. Über den Kupplungsbereich ist wieder eine Hülse 17 vorgesehen, die der Hülse 9 in der Figur 4 entspricht. Die sich im inneren Bereich befindlichen Leitungen sind mit 18, 19, 20 bezeichnet, was Figur 7 deutlich zu erkennen gibt. Die Verbindung zwischen dem inneren Rohr 15 und dem äußeren Rohr 16 im Bereich der Leitungen 18, 19, und 20 nach innen geschieht durch eine einfache Steckverbindung, die entsprechend im Berührungsfeld der Leitungsteile abgedichtet ist. Mit 21 ist ein Dichtring bezeichnet.

Wie aus den Abbildungen ersichtlich, kann die Verbindung entweder durch einen nach außen gerichteten Wulst 1b, der mit entsprechend geformten Spannhaken 2c zusammenarbeitet erfolgen, wie in Figur 1 bis 5 dargestellt, oder durch nach innen gerichtete ringförmige Vertiefungen 15b, die mit entsprechend geformten Spannhaken l6b zusammenwirken, wobei selbstverständlich die Profilierung der Vertiefungen, bzw. Wülste und die Profilierung der jeweiligen Spannhaken korrespondieren. Auch die Ausbildung der Hülsen 3, bzw. 9 kann entweder, wie in Figur 1 dargestellt, mittels einer eingesetzten Feder 4 oder auch ohne Feder und mit Fortsätzen wie die Hülse 9 in Figur 4, bzw. 6 zeigt, erfolgen.

Die Erfindung ist selbstverständlich nicht auf die Verbindung von Rohren, wie Hydraulikleitungen, usw. beschränkt, sondern kann mit Vorteil auch auf anderen Gebieten der Verbindungstechnik eingesetzt werden. Es können auch anstelle von Mehrfachrohren, wie in Figur 4 bzw. 6 dargestellt, Komlinationen zwischen Flüssigkeitsleitungen und Elektroleitungen durch in diese vorgeschlagene Kupplung miteinander verbunden werden. Die Innenflächen der Leitungen können selbstverständlich auch metallisiert sein oder mit zusätzlichen elektrischen Leitungen versehen sein, den jeweils der zu lösenden Aufgaben im Einsatzgebiet, beispielsweise im Fahrzeug-, Flug zeug-, Maschinenbau, etc. angepaßt werden, wo oftmals Flüssigkeiten unterschiedlicher Temperatur einander angeglichen werden müssen oder auf ein bestimmtes Temperaturniveau zu bringen sind. Dies kann beispielsweise dadurch geschehen, daß die eine Leitung, wie im Dieselfahrzeugbau von Vorteil, außen die aufgewärmte Flüssigkeit vom Motor zum Tank befördert, also als Rücklaufleitung dient, während innen das vom Tank zum Motor beförderte Dieselöl auf diese Weise bereits vorgewärmt die Kraftstoffpumpe und somit den Motor erreicht. Auch zusätzliche Heizleitungen sind in diesen Flüssigkeitsleitungen anbringbar.

**Ansprüche**

1. Schnellkupplung für Rohre oder dergl., vorzugsweise druckbeaufschlagte Rohrleitungen, Anschlußstutzen, etc. mit je einem Muffen-und einem Steckteil, wobei das Muffenteil außen mit einer Unterfederspannung in der Wirkstellung gehaltenen Hülse umgeben ist, dadurch gekennzeichnet, daß das Innere der beiden zu verbindenden Rohre - (1,2) im Kupplungsbereich einen ringförmigen Außenwulst (1b) besitzt, das Ende des äußeren Rohres (2) als über diesen Wulst (1b) einrastenden, radial federnden, längsgeschlitzten Ring (2b) als Schnapphaken (2c) ausgebildet ist und eine axial verschiebliche, in Wirkstellung den Kupplungsbereich abdeckende und den federnden Ring (26) mit seinen Schnapphaken (2c) radial nach außen fixierenden Hülse (3) vorgesehen ist.

2. Schnellkupplung für Rohre oder dergl. nach Anspruch 1, dadurch gekennzeichnet, daß die längs verschiebliche Hülse (3) zwischen einem am inneren Rohr (1) vorgesehenen und einem im Abstand darunter angeordneten ge teilten Ring (5) verschiebbar angeordnet und mit ihren Innenflächen auf der Außenfläche des Bundes (1a) und des Ringes (5) geweitend vorgesehen ist.

3. Schnellkupplung für Rohre oder dergl. nach Anspruch 1 und 2, dadurch gekennzeichnet, daß in dem Raum zwischen Zwischenwand des inneren Rohres (1) und der inneren Wand der Hülse (3), zwischen dem Bund (1a) und einem ringförmigen Vorsprung (3c) der Hülse (3) in Richtung auf die Außenfläche des inneren Rohres (1), eine Feder (4) vorgesehen ist.

4. Schnellkupplung für Rohre oder dergl.nach einem der vorgehenden Ansprüche,dadurch gekennzeichnet, daß sich die Hülse (3) an dem ringförmigen Vorsprung (3c) der Zwischenwand des inneren Rohres (1) abstützt.

5. Schnellkupplung für Rohre oder dergl nach einem der vorstehenden Ansprüche, dadurch gekennzeichnet, daß in der Nähe des glatten Endes des inneren Rohres (1) mindestens eine Ringdichtung (6) vorgesehen ist.

6. Schnellkupplung für Rohre oder dergl. nach einem der vorstehenden Ansprüche, dadurch gekennzeichnet, daß das äußere Rohr (2) mit einer muffenartigen Erweiterung (2a) versehen ist, an dessen Ende der Ring (2b) mit seinem Schnapphaken (2c) angeordnet ist.

7. Schnellkupplung für Rohre oder dergl.nach einem der vorstehenden Ansprüche, dadurch gekennzeichnet, daß mindestens eine ringförmige Dichtung (6) im Muffenbereich (2a) des äußeren Rohres vorgesehen ist.

8. Schnellkupplung für Rohre oder dergl.nach einem der vorstehenden Ansprüche, dadurch gekennzeichnet, daß das innere Rohr (1) im Kupplungsbereich mit einer ringförmigen Einbuchtung (15b) versehen ist, in die die Schnapphaken (2c) des Ringes (2b) des äußeren Rohres (2) rasten.

9. Schnellkupplung für Rohre oder dergl.nach einem der vorstehenden Ansprüche, dadurch gekennzeichnet, daß die Hülse (3) als abnehmbare und in eine ringförmige Hinterschneidung (2d) des äußeren Rohres (2) einschiebbare Abdeckung ausgebildet ist.

10. Schnellkupplung für Rohre oder dergl.nach Anspruch 1 und einem der folgenden, dadurch gekennzeichnet, daß die miteinander zu verbindenden inneren und äußeren Rohre (15,16) als Mehrfachrohre ausgebildet sind.

11. Schnellkupplung für Rohre oder dergl nach Anspruch 1 und einem der folgenden, dadurch gekennzeichnet, daß die Mehrfachrohre (15,16) im Kupplungsbereich mit ringförmigen Dichtungen (21) versehen.

12. Schnellkupplung für Rohre oder dergl.nach Anspruch 1 und einem der folgenden, dadurch gekennzeichnet, daß die zu verbindenden Rohre (15,16)innen metallisiert werden.

13. Schnellkupplung für Rohre oder dergl.nach Anspruch 1 und einem der folgenden, dadurch gekennzeichnet, daß in den Rohren (15,16) eine elektrische Leitung (18, 19,20) verlegt ist.

14. Schnellkupplung für Rohre oder dergl.nach Anspruch 1 und einem der folgenden, dadurch gekennzeichnet, daß in mindestens einem der zu verbindenden Rohre (15,16) eine elektrische Heizleitung enthalten ist.

Fig. 1

## Fig. 2

## Fig. 3

Fig. 4

10

9a

9

11

9b

13

12

7c

7

7a

7b

8b

10a

14a

8a

8

14

Fig. 5

7e

10

7

9

0 205 823

Fig. 6

Fig. 7